(19) Europäisches Patentamt
European Patent Office
Office européen des brevets

(11) EP 2 584 531 A1

(12) # EUROPEAN PATENT APPLICATION
published in accordance with Art. 153(4) EPC

(43) Date of publication:
**24.04.2013 Bulletin 2013/17**

(21) Application number: **11795450.3**

(22) Date of filing: **30.03.2011**

(51) Int Cl.:
*G06T 7/20* (2006.01) *G06F 3/01* (2006.01)

(86) International application number:
**PCT/JP2011/057944**

(87) International publication number:
**WO 2011/158542 (22.12.2011 Gazette 2011/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2010 JP 2010136399**

(71) Applicant: **Sony Corporation**
**Tokyo 108-0075 (JP)**

(72) Inventors:
- **SHIGETA, Osamu**
  **Tokyo 108-0075 (JP)**
- **NODA, Takuro**
  **Tokyo 108-0075 (JP)**

(74) Representative: **Turner, James Arthur**
**D Young & Co LLP**
**120 Holborn**
**London EC1N 2DY (GB)**

(54) **GESTURE RECOGNITION DEVICE, GESTURE RECOGNITION METHOD, AND PROGRAM**

(57) There is provided a gesture recognition device that recognizes a gesture of shielding the front side of the imaging sensor, the gesture recognition device including a first detection unit that detects a change in a captured image between a state in which a front side of an imaging sensor is not shielded and a state in which the front side of the imaging sensor is shielded, and a second detection unit that detects a region in which a gradient of a luminance value of the captured image is less than a threshold value in the captured image in the state in which the front side of the imaging sensor is shielded.

FIG.1

U
3
1
Pa
DETECTION OF CHANGE IN CAPTURED IMAGE
DETECTION OF GRADIENT OF LUMINANCE VALUE

U
3
1
Pb
RECOGNITION OF SHIELDING GESTURE



Printed by Jouve, 75001 PARIS (FR)

**Description**

Technical Field

The present invention relates to a gesture recognition device, a gesture recognition method, and a program.

Background Art

When users perform device operations in the related art, the users normally confirm a software key or a hardware key to be operated and then execute a predetermined operation. Therefore, a troublesome work is necessarily performed for an operation and it is difficult to perform an operation without confirming a key, for example, when looking away from the key.

In order to improve operability of devices, however, a gesture of shielding a sensor with an object such as a hand is considered to be recognized. Such a gesture operation enables users to perform an operation while looking away from a key without requiring a troublesome task.

Citation List

Patent Literature

Patent Literature 1: JP H7-146749A

Non-Patent Literature

Non-Patent Literature 1: "Hand Gesture User Interface Using Cell Broadband Engine™" by Ike et al, Toshiba Review, Vol. 62, No. 6, pp. 52 to 55, 2007

Summary of Invention

Technical Problem

Generally, gesture recognition is performed by detecting a shape of a detection object from a captured image of an imaging sensor, and executing a process of pattern recognition for the detection result (refer to Non-Patent Literature 1). Therefore, it is not possible to appropriately recognize a gesture even after trying to recognize a gesture that shields a front side of the imaging sensor with an object such as a hand or the like since a shape of an object located close to the front side of the imaging sensor cannot be detected.

Further, in some cases the gesture recognition is performed using an infrared light emitting device and an infrared light receiving device (refer to Non-Patent Literature 1). In this case, an object shielding the front side of the imaging sensor is recognized when an infrared light emitted from the light emitting device is reflected by a detection object and then the reflected infrared light is received by the light-receiving device. However, it is not possible to appropriately recognize the gesture unless using special devices such as an infrared light emitting device and an infrared light receiving device.

Therefore, the present invention provides a gesture recognition device, a gesture recognition method, and a program that are capable of recognizing a gesture of shielding a sensor surface of an imaging sensor without using any special devices.

Solution to Problem

According to an aspect of the present invention, there is provided a gesture recognition device that recognizes a gesture of shielding the front side of the imaging sensor, the gesture recognition device including a first detection unit that detects a change in a captured image between a state in which a front side of an imaging sensor is not shielded and a state in which the front side of the imaging sensor is shielded, and a second detection unit that detects a region in which a gradient of a luminance value of the captured image is less than a threshold value in the captured image in the state in which the front side of the imaging sensor is shielded.

The first detection unit may detect the change in the captured image based on a tracking result of feature points in the captured image.

The first detection unit may detect that the feature points tracked in the captured images in the state in which the front side of the imaging sensor is not shielded are lost in the captured images in a state in which the front side of the imaging sensor is screened with a hand.

The first detection unit may determine whether a ratio of the feature points lost during tracking to the feature points tracked in the plurality of captured images in a predetermined period is equal to or greater than a threshold value.

The gesture recognition device may further include a movement determination unit that determines movement of the imaging sensor based on a movement tendency of the plurality of feature points, and the predetermined period may be set as a period in which the imaging sensor is not moved.

The second detection unit may detect the region in which the gradient of the luminance value of the captured image is less than the threshold value based on a calculation result of a luminance value histogram relevant to the captured image.

The second detection unit may determine whether a value obtained by normalizing a sum of frequencies near a maximum frequency as a total sum of frequencies is equal to or more than a threshold value during the predetermined period using the luminance value histogram relevant to the plurality of captured images in the predetermined period.

The second detection unit may detect the region in which the gradient of the luminance value of the captured image is less than the threshold value based on an edge image relevant to the captured image.

The second detection unit may determine whether a ratio of edge regions in the edge images is less than the threshold value during the predetermined period using the edge images relevant to the plurality of captured images in the predetermined period.

The first and second detection units may perform a process on a partial region of the captured image, instead of the captured image.

The first and second detection units may perform a process on a grayscale image generated with a resolution less than that of the captured image from the captured image.

The gesture recognition device may recognize a gesture provided by combining a gesture of shielding the front side of the imaging sensor and a gesture of exposing the front side of the imaging sensor.

The gesture recognition device may further include the photographing sensor that captures a front side image.

Further, according to another aspect of the present invention, there is provided a gesture recognition method including detecting a change in a captured image between a state in which a front side of an imaging sensor is not shielded and a state in which the front side of the imaging sensor is shielded, and detecting a region in which a gradient of a luminance value of the captured image is less than a threshold value in the captured image in the state in which the front side of the imaging sensor is shielded.

Further, according to another aspect of the present invention, there is provided a program for causing a computer to execute detecting a change in a captured image between a state in which a front side of an imaging sensor is not shielded and a state in which the front side of the imaging sensor is shielded, and detecting a region in which a gradient of a luminance value of the captured image is less than a threshold value in the captured image in the state in which the front side of the imaging sensor is shielded. Here, the program may be provided using a computer-readable storage medium or may be provided via communication tool and the like.

## Advantageous Effects of Invention

According to the present invention described above, it is possible to provide a gesture recognition device, a gesture recognition method, and a program capable of recognizing a gesture of shielding a sensor surface of an imaging sensor without using a special device.

## Brief Description of Drawings

[Fig. 1] Fig. 1 is an illustration of the overview of a gesture recognition device according to embodiments of the invention.

[Fig. 2] Fig. 2 is a block illustration of the main functional configuration of a gesture recognition device according to a first embodiment.

[Fig. 3] Fig. 3 is a flowchart of a main order of operations of the gesture recognition device.

[Fig. 4] Fig. 4 is a flowchart of a recognition order of a shielding gesture.

[Fig. 5] Fig. 5 is an illustration of the detection results of feature points before a gesture is performed.

[Fig. 6] Fig. 6 is an illustration of a grayscale image and the calculation result of a luminance value histogram before a gesture is performed.

[Fig. 7] Fig. 7 is an illustration of the detection results of feature points when an imaging sensor is moved.

[Fig. 8] Fig. 8 is an illustration of the detection results of feature points when a gesture is performed.

[Fig. 9] Fig. 9 is an illustration of a grayscale image and the calculation result of a luminance value histogram when a gesture is performed.

[Fig. 10] Fig. 10 is a block illustration of the main functional configuration of a gesture recognition device according to a second embodiment.

[Fig. 11] Fig. 11 is a flowchart of the recognition order of a shielding gesture.

[Fig. 12] Fig. 12 is an illustration of a grayscale image and an edge image before a gesture is performed.

[Fig. 13] Fig. 13 is an illustration of a grayscale image and an edge image when a gesture is performed.

[Fig. 14] Fig. 14 is an illustration of the detection results of feature points when a gesture is performed according to modification examples of the first and second embodiments.

Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

[1. Overview of Gesture Recognition Device 1]

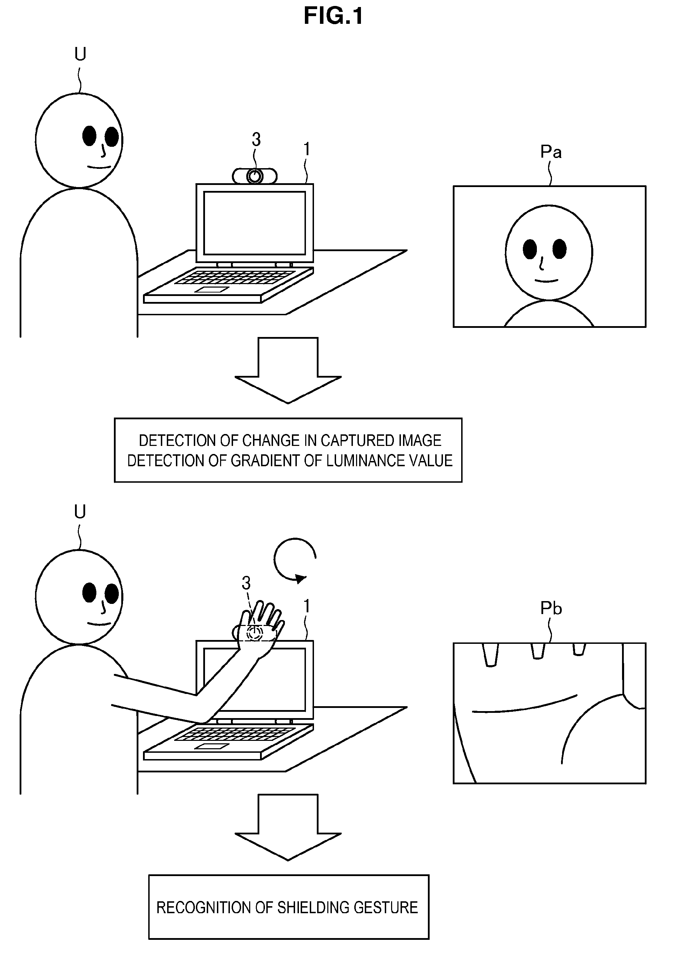

First, the overview of a gesture recognition device 1 according to embodiments of the invention will be described with reference to Fig. 1.

As shown in Fig. 1, the gesture recognition device 1 is capable of recognizing a gesture of shielding a sensor surface of an imaging sensor 3 without using a special device. Hereinafter, the sensor side is assumed to be formed on the front side of the imaging sensor 3. However, the sensor surface may be formed in another surface.

The gesture recognition device 1 is an information processing device such as a personal computer, a television receiver, a portable information terminal, or a mobile telephone. In the gesture recognition device 1, a video signal is input from the imaging sensor 3 such as a video camera mounted on or connected to the gesture recognition device 1. A case in which the gesture recognition device 1 and the imaging sensor 3 are separately configured will be described below, but the gesture recognition device 1 and the imaging sensor 3 may be integrally configured.

When a user U performs a predetermined action on the front side of the imaging sensor 3, the gesture recognition device 1 recognizes a gesture based on a video signal input from the imaging sensor 3. Examples of the gesture include a shielding gesture of shielding the front side of the imaging sensor 3 with an object such as a hand and a flicking gesture of moving an object to the right and left on the front side of the imaging sensor 3.

For example, when the gesture recognition device 1 is applied to a music reproduction application, a shielding gesture corresponds to an operation of stopping music reproduction, and left and right flicking gestures correspond to reproduction forward and backward operations, respectively. When a gesture is recognized, the gesture recognition device 1 notifies the user U of a recognition result of the gesture and performs a process corresponding to the recognized gesture.

The gesture recognition device 1 recognizes the shielding gesture in the following order. When the user U performs the shielding gesture, a change in a captured image is detected between a captured image Pa in a state (before the gesture is performed) in which the front side of the imaging sensor 3 is not shielded and a captured image Pb in a state (at the time of the gesture) in which the front side of the imaging sensor 3 is shielded (first detection). A region in which the gradient of a luminance value i of the captured image is less than a threshold value is detected from the captured image Pb in the shielded state (at the gesture time) (second detection).

Here, when a gesture of shielding the front side of the imaging sensor 3 with an object such as a hand is performed, the image Pa in which an image to the front side of the imaging sensor 3 is captured is considerably changed compared to the image Pb in which the object is captured. Therefore, the change in the captured image is detected. Further, a region in which the gradient of the luminance value i is less than the threshold value is detected, since the gradient of the luminance value i decreases in the captured image Pb in which the object shielding the front side of the imaging sensor 3 is closely captured.

Therefore, by satisfying first and second detection conditions, it is possible to recognize the gesture of shielding the front side of the imaging sensor 3. Here, since the imaging sensor 3 detects the change in the captured image and the gradient of the luminance value i, the imaging sensor 3 may not detect the shape of an object located closed to the front side of the imaging sensor 3. Further, since the gesture is recognized based on the captured image of the imaging sensor 3, a special device may not be used.

<First Embodiment>

[2. Configuration of Gesture Recognition Device 1]

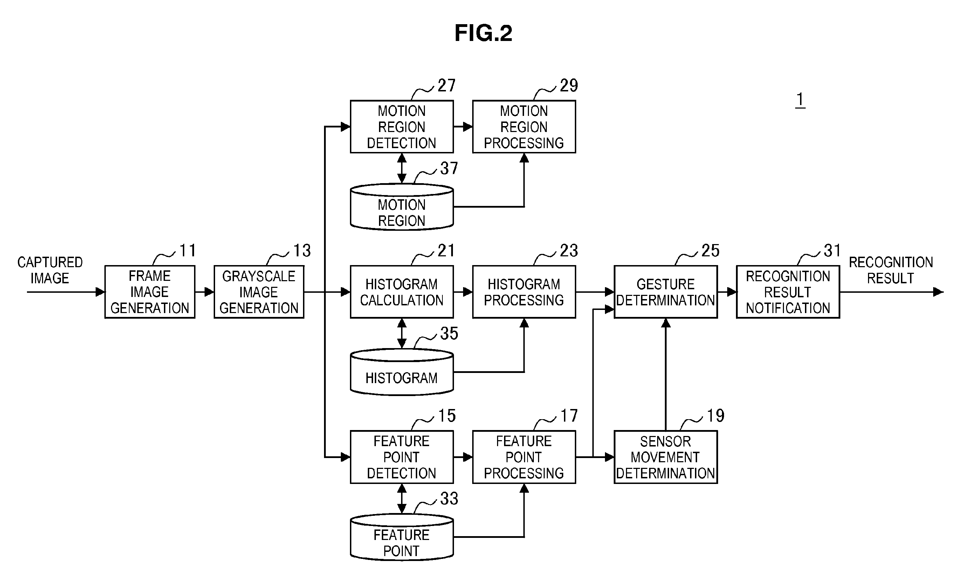

Next, the configuration of the gesture recognition device 1 according to a first embodiment will be described with reference to Fig. 2.

As shown in Fig. 2, the gesture recognition device 1 according to the first embodiment includes a frame image generation unit 11, a grayscale image generation unit 13, a feature point detection unit 15, a feature point processing unit 17, a sensor movement determination unit 19, a histogram calculation unit 21, a histogram processing unit 23, a gesture determination unit 25, a motion region detection unit 27, a motion region processing unit 29, a recognition result notification unit 31, a feature point storage unit 33, a histogram storage unit 35, and a motion region storage unit 37.

The frame image generation unit 11 generates a frame image based on a video signal input from the imaging sensor 3. The frame image generation unit 11 may be installed in the imaging sensor 3.

The grayscale image generation unit 13 generates a grayscale image M (which is a general term for grayscale images) with a resolution lower than that of the frame image based on the frame image supplied from the frame image generation unit 11. The grayscale image M is generated as a monotone image obtained by compressing the frame image to a resolution of, for example, 1/256.

The feature point detection unit 15 detects feature points in the grayscale images M based on the grayscale images M supplied from the grayscale image generation unit 13. For example, the feature point in the grayscale image M means a pixel pattern corresponding to a feature portion such as a corner of an object captured by the imaging sensor 3. The detection result of the feature point is temporarily stored as feature point data in the feature point storage unit 33.

The feature point processing unit 17 sets the plurality of grayscale images M included in a determination period corresponding to several immediately previous frames to tens of immediately previous frames as targets and processes the feature point data. The feature point processing unit 17 tracks the feature points in the grayscale images M based on the feature point data read from the feature point storage unit 33. Movement vectors of the feature points are calculated. The movement vectors are clustered in a movement direction of the feature points.

The feature point processing unit 17 sets the plurality of grayscale images M in a predetermined period as targets, calculates a ratio of the feature points (lost feature points) lost during the tracking to the feature points tracked in the grayscale images M, and compares the ratio with a predetermined threshold value. The predetermined period is set to be shorter than the determination period. The lost feature point means a feature point which has been lost during the tracking of the predetermined period and thus may not be tracked. The comparison result of the lost feature points is supplied to the gesture determination unit 25.

The sensor movement determination unit 19 determines whether the imaging sensor 3 (or the gesture recognition device 1 on which the imaging sensor 3 is mounted) is moved based on the clustering result supplied from the feature point processing unit 17. The sensor movement determination unit 19 calculates a ratio of the movement vectors indicating movement in a given direction to the movement vectors of the feature points and compares the ratio with a predetermined threshold value. When the calculation result is greater than or equal to the predetermined threshold value, it is determined that the imaging sensor 3 is moved. When the calculation result is less than the predetermined threshold value, it is determined that the imaging sensor 3 is not moved. The determination result of the movement of the sensor is supplied to the gesture determination unit 25.

Based on the grayscale image M supplied from the grayscale image generation unit 13, the histogram calculation unit 21 calculates a histogram H (which is a general term for histograms) indicating a frequency distribution of the luminance values i of the pixels forming the grayscale image M. The calculation result of the histogram H is temporarily stored as histogram data in the histogram storage unit 35.

Based on the histogram data read from the histogram storage unit 35, the histogram processing unit 23 sets the plurality of grayscale images M in a predetermined period as targets and calculates a ratio of the pixels with the given luminance value i. The histogram processing unit 23 determines whether the ratio of the pixels with the given luminance value i is greater than or equal to a predetermined threshold value during a predetermined period. The predetermined period is set as a period shorter than the determination period. The determination result of the ratio of the pixels is supplied to the gesture determination unit 25.

The gesture determination unit 25 is supplied with the comparison result of the lost feature points from the feature point processing unit 17 and is supplied with the determination result of the ratio of the pixels from the histogram processing unit 23. The gesture determination unit 25 determines whether the ratio of the lost feature points is greater than or equal to a predetermined threshold value and the ratio of the pixels with the given luminance value i is greater than or equal to a predetermined value during the predetermined period. Here, when the determination result is positive, a shielding gesture is recognized. The shielding determination result is supplied to the recognition result notification unit 31. The gesture determination unit 25 recognizes the shielding gesture based on the determination result of the movements of the imaging sensor supplied from the sensor movement determination unit 19, only when the imaging sensor 3 is not moved.

The motion region detection unit 27 detects a motion region based on a frame difference between the grayscale images M supplied from the grayscale image generation unit 13. The detection result of the motion region is temporarily stored as motion region data in the motion region storage unit 37. The motion region refers to a region indicating an object being moved in the grayscale images M.

The motion region processing unit 29 sets the plurality of grayscale images M in a predetermined period as targets and processes the motion region data of the grayscale images M. Based on the motion region data read from the motion region storage unit 37, the motion region processing unit 29 calculates the central positions of the motion regions and calculates a movement trajectory of the motion regions in the consecutive grayscale images M. The predetermined period is set as a period shorter than the determination period.

The above-described gesture determination unit 25 calculates movement amounts (or speeds, as necessary) of the motion regions based on the calculation result of the movement trajectory supplied from the motion region processing unit 29. The gesture determination unit 25 determines whether the movement amounts (or speeds, as necessary) of the motion regions satisfy a predetermined reference. Here, when the determination result is positive, a flicking gesture is recognized. The determination result of the flicking gesture is supplied to the recognition result notification unit 31.

The recognition result notification unit 31 notifies the user U of the recognition result of the gesture based on the determination result supplied from the gesture determination unit 25. For example, the recognition result of the gesture is notified of as text information, image information, sound information, or the like through a display, a speaker, or the like connected to the gesture recognition device 1.

The predetermined periods used for the feature point processing, the histogram processing, and the motion region processing may be set as the same period or periods shifted somewhat with respect to one another. Further, the predetermined threshold values used for the feature point processing, the histogram processing, and the movement determination processing are each set according to the necessary detection accuracy.

The feature point detection unit 15 and the feature point processing unit 17 function as a first detection unit. The histogram calculation unit 21 and the histogram processing unit 23 function as a second detection unit. The feature point storage unit 33, the histogram storage unit 35, and the motion region storage unit 37 are configured as, for example, an internal storage device controlled by a processor or the like or an external storage device.

The frame image generation unit 11, the grayscale image generation unit 13, the feature point detection unit 15, the feature point processing unit 17, the sensor movement determination unit 19, the histogram calculation unit 21, the histogram processing unit 23, the gesture determination unit 25, the motion region detection unit 27, the motion region processing unit 29, and the recognition result notification unit 31 are configured as, for example, an information processing device including a processor such as a CPU or a DSP.

At least some of the functions of the above-described constituent elements may be realized as hardware such as circuits or software such as programs. When each constituent element is realized as software, the function of each constituent element is realized through a program executed on a processor.

[3. Process of Gesture Recognition Device 1]

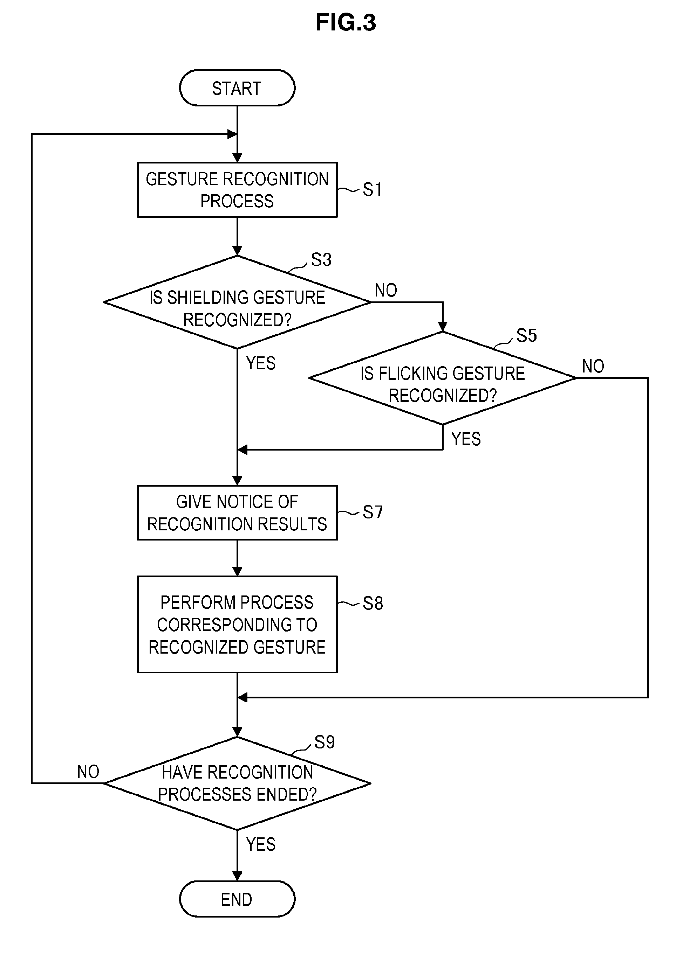

Next, the process of the gesture recognition device 1 according to the first embodiment will be described with reference to Figs. 3 to 9.

First, the overall processes of the gesture recognition device 1 will be described. As shown in Fig. 3, the gesture recognition device 1 performs recognition processes of recognizing a shielding gesture and a flicking gesture (step S1). The recognition processes will be described in detail later. When the shielding gesture or the flicking gesture is recognized ("Yes" in S3 or S5), the user U is notified of the recognition result (S7) and a process corresponding to the recognized gesture is performed (S8). The recognition processes are repeated until the recognition processes end (S9). When no gesture is recognized, the recognition result may be notified of.

(Shielding Gesture)

Next, the recognition process of recognizing the shielding gesture will be described.

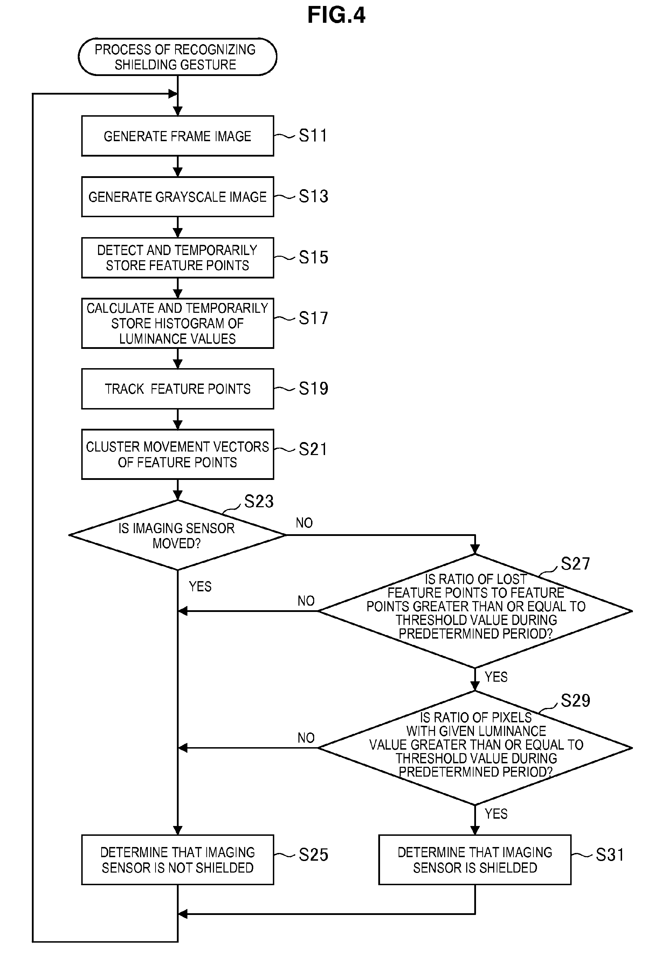

When the recognition process starts, as shown in Fig. 4, the frame image generation unit 11 generates a frame image based on a video signal input from the imaging sensor 3 (S11). The frame image may be generated for each frame or may be generated at intervals of several frames by thinning the video signal.

The grayscale image generation unit 13 generates the grayscale images M based on the frame images supplied from the frame image generation unit 11 (S13). Here, by performing a detection process using the grayscale images M with a resolution lower than that of the frame image, it is possible to efficiently detect a change in the frame image and the gradient of the luminance value i. Further, by using a monotone image, it is possible to detect the change in the frame image or the gradient of the luminance value i with relatively high accuracy even under an environment in which shading is relatively insufficient.

The feature point detection unit 15 detects the feature points in the grayscale images M based on the grayscale images M supplied from the grayscale image generation unit 13 (S15). The detection result of the feature points is temporarily stored as feature point data including pixel patterns, detection positions, or the like of the feature points in association with frame numbers in the feature point storage unit 33 (S15).

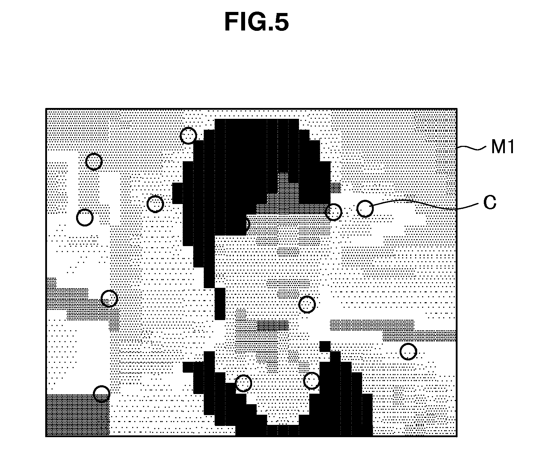

Fig. 5 shows the detection result of the feature points before a gesture is performed. In the example shown in Fig. 5, markers C indicating a plurality of feature points detected from the image are displayed along with a grayscale image M1 including an image in which the upper body of the user U and a background are captured. As shown in Fig. 5, pixel patterns corresponding to feature portions of the user U and the background are detected as the feature points.

The histogram calculation unit 21 calculates a histogram H of the luminance values i of the pixels forming the grayscale image M based on the grayscale image M supplied from the grayscale image generation unit 13 (S17). The calculation result of the histogram H is temporarily stored as histogram data indicating the frequency distribution of the luminance values i in association with the frame numbers in the histogram storage unit 35. Further, the histogram H may be calculated when the grayscale image M is generated (S13).

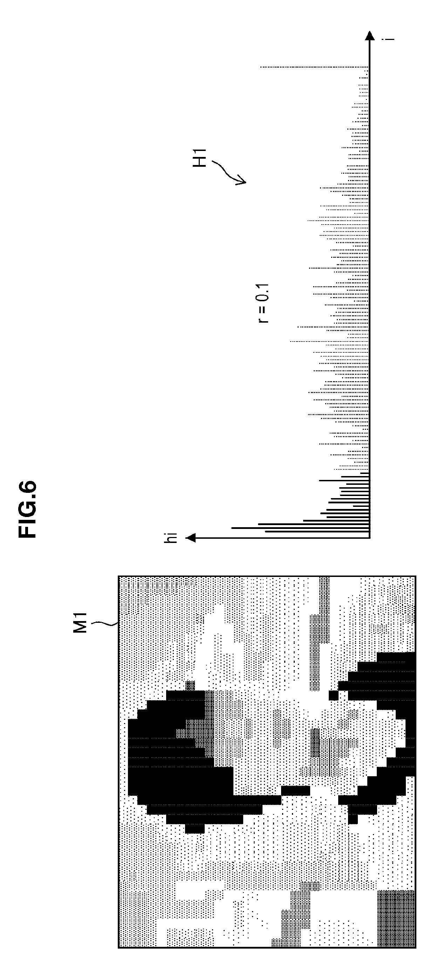

Fig. 6 shows the calculation result of the grayscale image M1 and a luminance value histogram H1 before a gesture is performed. The histogram H indicates the frequency distribution of the luminance values i, where the horizontal axis represents the luminance value i (scale value) and the vertical axis represents a frequency hi of the luminance value i. Here, the distribution of the luminance values i can be expressed using a normalization index r of the following equation. On the histogram H, it is assumed that hsum is the total sum of the frequencies hi, imax is the luminance value i of the maximum frequency, and w is a predetermined range near the luminance value imax of the maximum frequency. Further, the predetermined range w is set according to necessary detection accuracy.

The normalization index r is an index in which the sum of the frequencies hi in the predetermined range w near the luminance value imax of the maximum frequency is normalized with the total sum hsum of the frequencies. The normalization index r is calculated as a larger value, as the grayscale image M is formed by the pixels with the given luminance value i, that is, the number of regions with a small gradient of the luminance value i is larger.

[Math. 1]

$$r = \frac{\sum_{i=i_{max}-w/2}^{i_{max}+w/2} h_i}{h_{sum}}$$

Here, since the upper body of the user U and the background are captured, the grayscale image M1 shown in Fig. 6 is formed by the pixels with various luminance values i. Therefore, in the histogram H1, the frequencies hi are not concentrated in the predetermined range w near the luminance value imax of the maximum frequency, and thus large irregularity is recognized in the distribution of the luminance values i. Accordingly, in the grayscale image M1 shown in Fig. 6, for example, the normalization index r=0.1 is calculated.

In the processes of steps S11 to S17, the plurality of grayscale images M included in the determination period (0.5 seconds or the like) corresponding to several immediately previous frames to tens of immediately previous frames are set as targets. For example, processes of frame numbers 1 to 10 are sequentially performed in a first determination period and processes of frame numbers 2 to 11 are sequentially performed in a second determination period. The feature point data and the histogram data (including the motion region data) are temporarily stored to correspond to at least the determination period. Then, when the plurality of target images in a specific determination period are set and the processes of steps S11 to S 17 are completed, the processes subsequent to step S 19 are performed.

The feature point processing unit 17 first tracks the feature points in the plurality of grayscale images M based on the feature point data read from the feature point storage unit 33 (S19). The tracking of the feature points is performed by specifying the same feature points based on the pixel patterns in the consecutive grayscale images M. The tracking result of the feature points can be expressed as a movement trajectory of the feature points. Further, the feature points lost from the grayscale images M during the tracking of the feature points are considered as the lost feature points.

Next, the movement vectors of the feature points are calculated and the movement vectors are clustered in the movement direction of the feature points (S21). The movement vector of the feature point is expressed as a straight line or a curved line that binds the movement start point and the movement end point of the feature point being tracked in the plurality of grayscale images M in the determination period.

The sensor movement determination unit 19 determines whether the imaging sensor 3 is moved based on the clustering result supplied from the feature point processing unit 17 (S23). First, the ratio of the movement vectors indicating the movement in a given direction to the movement vectors of the feature points is calculated and this ratio is compared to a predetermined threshold value (a ratio of 0.8 or the like). Then, when the calculation result is greater than or equal to the predetermined threshold value, it is determined that the imaging sensor 3 is moved. When the calculation result is less than the predetermined threshold value, it is determined that the imaging sensor 3 is not moved.

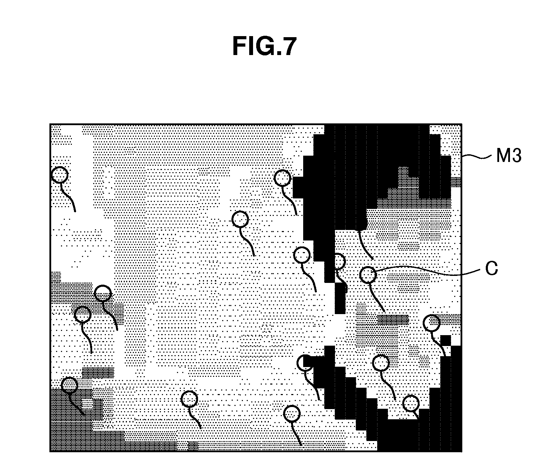

Fig. 7 shows the detection result of the feature points when the imaging sensor 3 is moved. A grayscale image M3 shown in Fig. 7 is a grayscale image M sever frames after the grayscale image M1 shown in Fig. 5. In the example shown in Fig. 7, the feature points in the grayscale image M3 are moved in the upper leftward direction, as the imaging sensor 3 is moved in the lower rightward direction. The movement of the feature points is viewed as markers C indicating the movement trajectory of the feature points along with the grayscale image M3. Here, due to the movement of the imaging sensor 3, it is recognized that most of the feature points are moved in the given direction (upper leftward inclination).

Here, when it is determined that the imaging sensor 3 is moved, the determination result is supplied to the gesture determination unit 25. When the imaging sensor 3 is moved, the gesture determination unit 25 determines that the imaging sensor 3 is not shielded in order to prevent the shielding gesture from being erroneously recognized due to erroneous detection of the lost feature points (S25).

Conversely, when it is determined that the imaging sensor 3 is not moved, the following process is performed. Based on the feature point data read from the feature point storage unit 33, the feature point processing unit 17 sets the plurality of grayscale images M in the predetermined period as targets, calculates a ratio of the lost feature points to the feature point tracked in the grayscale images M, and compares this ratio with the predetermined threshold value (the ratio of 0.8 or the like) (S27). That is, the ratio of the feature points lost in the predetermined period to the feature points (a total of the feature points that continue to be detected in the predetermined period and the feature points lost halfway) detected within the predetermined period is compared with the predetermined threshold value.

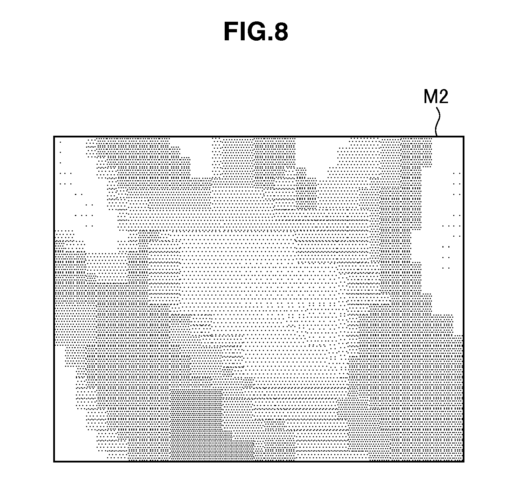

Fig. 8 shows an example of the detection result of the feature points when a gesture is performed. In the example shown in Fig. 8, a grayscale image M2 in which a hand shielding the front side of the imaging sensor 3 is captured is displayed. In the example shown in Fig. 8, since the image in which the upper body of the user U and the background are captured is hidden by shielding the front side of the imaging sensor 3, the markers C indicating the feature points detected from the image are lost.

Based on the histogram data read from the histogram storage unit 35, the histogram processing unit 23 sets the plurality of grayscale images M in the predetermined period as targets and calculates the ratio of the pixels with the given luminance value i. Here, the ratio of the pixels with the given luminance value i can be expressed by the above-described normalization index r. It is determined whether the ratio of the pixels with the given luminance value i is greater than or equal to a predetermined threshold value (where $r>0.7$ or the like) in a predetermined period (S29).

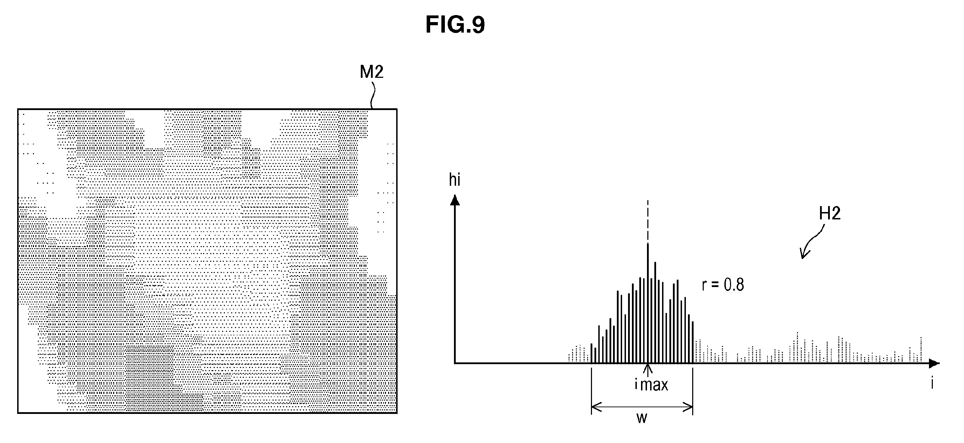

Fig. 9 shows the grayscale image M2 and the calculation result of the luminance value histogram H2 when a gesture is performed. Here, in the grayscale image M2 shown in Fig. 9, the hand shielding the front side of the imaging sensor 3 is captured. Therefore, the pixels with the given luminance value i are configured to be abundant.

Therefore, in the histogram H2, the frequencies hi are concentrated in the predetermined range w near the luminance value imax of the maximum frequency, and thus large irregularity is not recognized in the distribution of the luminance values i. For example, in the grayscale image M2 shown in Fig. 9, the normalization index $r=0.8$ is calculated. When the front side of the imaging sensor 3 is shielded in a predetermined period, a large normalization index r is calculated in the predetermined period. Accordingly, it is determined that the ratio of the pixels with the given luminance value i is greater than or equal to the predetermined threshold value in the predetermined period, that is, many regions in which the gradient of the luminance value i is less than the predetermined threshold value are present in the predetermined period.

The gesture determination unit 25 is supplied with the comparison result of the lost feature points from the feature point processing unit 17 and is supplied with the determination result of the ratio of the pixels from the histogram processing unit 23. Then, it is determined whether the ratio of the lost feature points is greater than or equal to the predetermined threshold value and the ratio of the pixels with the given luminance value i is greater than or equal to the predetermined threshold value during the predetermined period. Here, when the determination result is positive, it is determined that the imaging sensor 3 is shielded (S31) and the shielding gesture is recognized. Further, when at least one of the conditions is not satisfied, it is determined that the imaging sensor 3 is not shielded (S25) and the shielding gesture is not recognized.

The recognition result notification unit 31 notifies the user U of the recognition result depending on the shielding determination result supplied from the gesture determination unit 25. Further, when the shielding gesture is recognized, a corresponding process is performed.

(Flicking Gesture)

Next, the recognition process of recognizing the flicking gesture will be described.

The motion region detection unit 27 detects motion regions based on the frame difference between the grayscale images M supplied from the grayscale image generation unit 13. That is, the motion regions are detected by acquiring change regions included in the consecutive grayscale images M. The detection result of the motion regions is temporarily stored as the motion region data in the motion region storage unit 37.

The motion region processing unit 29 sets the plurality of grayscale images M in the predetermined period as targets and processes the motion region data of the grayscale images M. The central positions of the motion regions are calculated based on the motion region data read from the motion region storage unit 37 and the movement trajectory of the motion regions in the consecutive grayscale images M is calculated.

The gesture determination unit 25 calculates the movement amounts (or speeds, as necessary) of the motion regions based on the calculation result of the movement trajectory supplied from the motion region processing unit 29. Then, the gesture determination unit 25 first determines whether the sizes of the motion regions are less than a predetermined threshold value so that a motion caused due to the movement of the imaging sensor 3 is not recognized as a flicking gesture (to move the entire captured image when the imaging sensor 3 is moved). Next, it is determined whether the motion amounts of the motion regions are greater than or equal to a predetermined threshold value so that a motion caused with a very small movement amount is not recognized as a flicking gesture.

Next, it is determined whether the movement direction of the motion region is a predetermined direction. For example, when left and right flicking gestures are recognized, it is determined whether the movement direction of the motion region is recognizable as a left or right direction in consideration of an allowable error for the imaging sensor 3. Here, when the determination result is positive, the flicking gesture is recognized. The flicking determination result is supplied to the recognition result notification unit 31, the user U is notified of the flicking determination result, and a process corresponding to the flicking gesture is performed depending on the recognition result.

<Second Embodiment>

[4. Configuration and Process of Gesture Recognition Device 2]

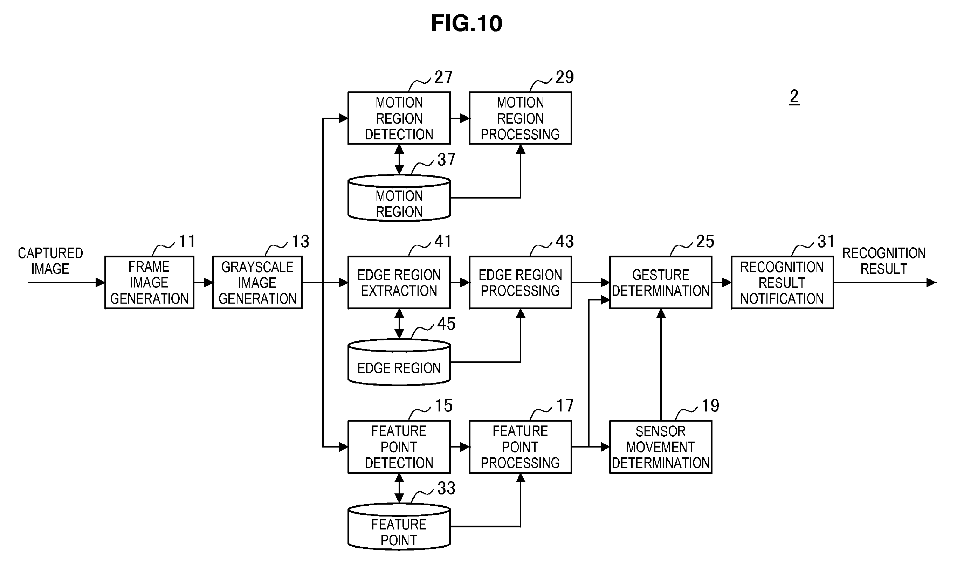

Next, a gesture recognition device 2 according to a second embodiment will be described with reference to Figs. 10 to 13. The gesture recognition device 2 according to the second embodiment recognizes a shielding gesture using an edge region A in an edge image E (which is a general term for edge images) instead of the histogram H indicating the frequency distribution of the luminance values i. The repeated description of the first embodiment will not be made below.

As shown in Fig. 10, the gesture recognition device 2 includes an edge region extraction unit 41 and an edge region processing unit 43 instead of the histogram calculation unit 21 and the histogram processing unit 23.

The edge region extraction unit 41 generates an edge image E based on a grayscale image M supplied from the grayscale image generation unit 13 and extracts an edge region A from the edge image E. For example, the edge region A is extracted using a Sobel filter, a Laplacian filter, an LOG filter, a Canny method, or the like. The extraction result of the edge region A is temporarily stored as edge region data in the edge region storage unit 45.

Based on the edge region data read from edge region storage unit 45, the edge region processing unit 43 sets the plurality of edge images E in a predetermined period as targets and calculates a ratio of the edge regions A in the edge images E. Then, the edge region processing unit 43 determines whether the ratio of the edge regions A is less than a predetermined threshold value (0.1 or the like) during a predetermined period. Further, the predetermined period is set as a period shorter than the determination period corresponding to several immediately previous frames to tens of immediately previous frames. The determination result of the edge regions A is supplied to the gesture determination unit 25.

The gesture determination unit 25 is supplied with the comparison result of the lost feature points from the feature point processing unit 17 and is supplied with the determination result of the edge regions A from the edge region processing unit 43. Then, the gesture determination unit 25 determines whether the ratio of the lost feature points is greater than or equal to a predetermined threshold value and the ratio of the edge regions A is less than a predetermined threshold value during a predetermined period.

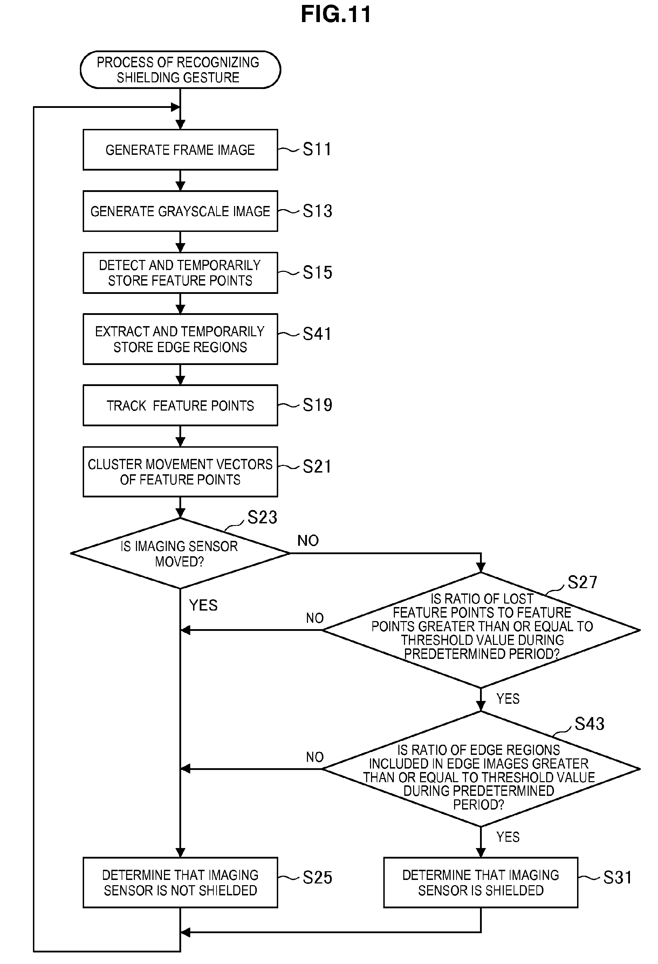

As shown in Fig. 11, the edge region extraction unit 41 generates the edge images E based on the grayscale images M supplied from the grayscale image generation unit 13 and extracts the edge regions A (S41). The edge regions A are temporarily stored as edge region data indicating a ratio of the edge regions A in the edge images E in association with frame numbers in the edge region storage unit 45 (S41).

Based on the edge region data read from the edge region storage unit 45, the edge region processing unit 43 sets the plurality of edge images E in a predetermined period as targets and determines whether a ratio of the edge regions A in the edge images E is less than a predetermined threshold value during a predetermined period (S43).

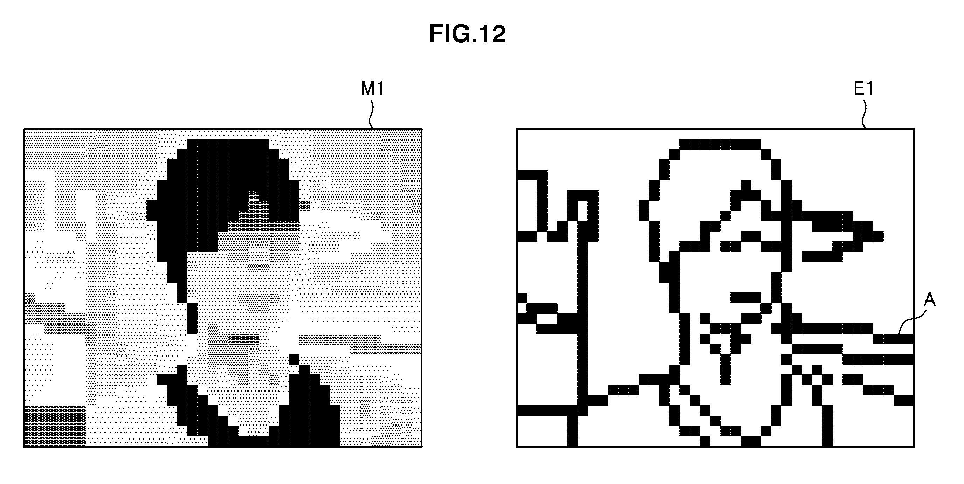

Fig. 12 shows a grayscale image M1 and an edge image E1 before a gesture is performed. As shown in Fig. 12, the edge image E is an image in which an edge region A forming a boundary of pixels in which there is a large difference between the luminance values i among the pixels forming the grayscale image M. Here, the edge image E1 shown in Fig. 12 is formed by the pixels with various luminance values i, since the upper body of the user U and a background are captured. Therefore, in the edge image E1, many pixels with different luminance values i are present, and many edge regions A forming the boundary of the pixels with the different luminance values i are recognized.

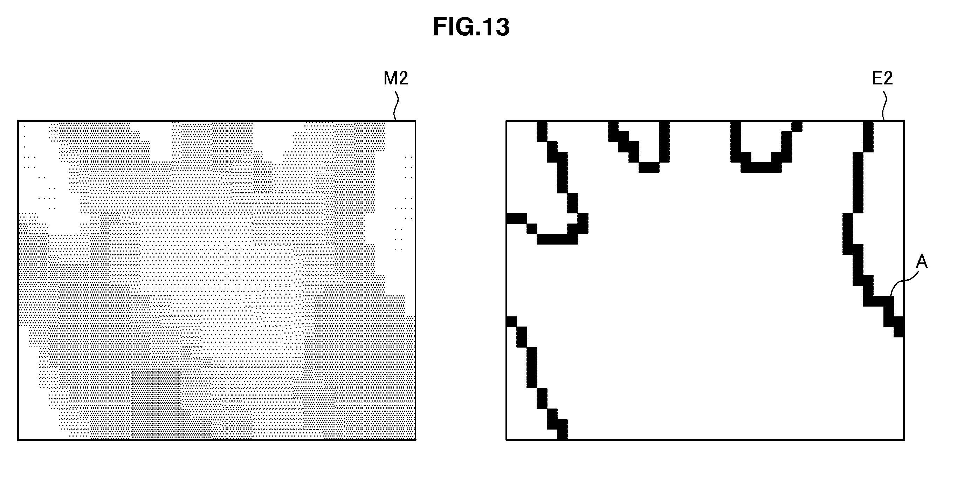

On the other hand, Fig. 13 shows a grayscale image M2 and an edge image E2 when a gesture is performed. Here, in the grayscale image M2 shown in Fig. 13, a hand shielding the front side of the imaging sensor 3 is captured, and thus many pixels with the given luminance value i are included. Therefore, in the edge image E2, not many pixels with different luminance values i are present and not many edge regions A forming the boundary of the pixels in which there is a large difference between the luminance values i are recognized. Further, when the front side of the imaging sensor 3 is shielded during a predetermined period, the edge image E not including many edge regions A during the predetermined period is generated. Accordingly, it is determined that the ratio of the edge regions A is less than a predetermined threshold value during a predetermined period, that is, there are many regions with the gradient of the luminance value i less than a predetermined threshold value during a predetermined.

The gesture determination unit 25 is supplied with the comparison result of the lost feature points from the feature point processing unit 17 and is supplied with the determination result of the ratio of the edge regions from the edge region processing unit 43. Then, it is determined whether the ratio of the lost feature points is greater than or equal to a predetermined threshold value and the ratio of the edge regions A is less than a predetermined threshold value during a predetermined period. Here, when the determination result is positive, it is determined that the imaging sensor 3 is shielded (S31) and a shielding gesture is recognized.

[Modification Examples]

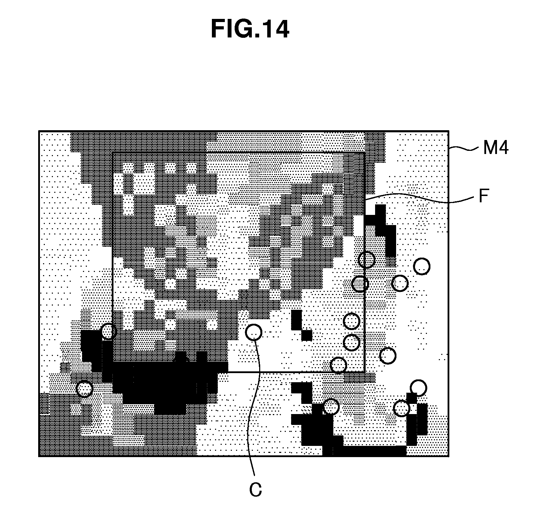

Next, a gesture recognition device according to modification examples of the first and second embodiments will be described with reference to Fig. 14. In the modification examples, a shielding gesture is recognized using a grayscale image M corresponding to a partial region of a captured image, instead of a grayscale image M corresponding to the entire captured image. The repeated description of the first and second embodiments will not be made below.

In the modification example, the frame image generation unit 11 or the grayscale image generation unit 13 generates a frame image or a grayscale image M corresponding to a partial region of a frame image. Here, the partial region of the frame image means a region that is shielded with an object such as a hand in the front region of the imaging sensor 3 when a shielding gesture is performed. The partial region is set in advance as a predetermined range such as an upper portion of a captured image.

In this modification example, as shown in Fig. 14, the first and second detection processes are performed on a partial region (a region F in Fig. 14) of the frame image as a target, as in the first and second embodiments. That is, the partial region is set as a target, it is determined whether the ratio of the lost feature points is greater than or equal to a predetermined threshold value, and the ratio of the pixels with a given luminance value i is greater than or equal to a predetermined threshold value during a predetermined period, or the ratio of the edge regions A is less than a predetermined threshold value during a predetermined period. In the example shown in Fig. 14, the upper portion of the captured image is partially shielded. In the example shown in Fig. 14, the detection result of the feature points is shown when a gesture is performed. However, even when the ratio of the pixels with the given luminance value i or the ratio of the edge regions is calculated, the partial region of the frame image is set as a target and processed.

Thus, even when the front side of the imaging sensor 3 is not completely shielded, a shielding gesture can be recognized by partially shielding a predetermined range. Even when shading occurs somewhat in an object shielding the imaging sensor 3 due to the influence of illumination, daylight, or the like, a shielding gesture can be recognized.

[5. Summarization]

According to the gesture recognition devices 1 and 2 and the gesture recognition methods of the embodiments of the invention, as described above, the change in the captured image (the grayscale image M) and the gradient of the luminance value i are detected. Therefore, since the shape of an object located close to the front side of the imaging sensor 3 may not be detected and a gesture is recognized based on the captured image (the grayscale image M) of the imaging sensor 3, a special device may not be used. Accordingly, a gesture of shielding the sensor side of the imaging sensor 3 can be recognized without using a special device.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

For example, the cases in which the shielding gesture of shielding the front side of the imaging sensor 3 is recognized have been described. However, a gesture of combining a gesture of shielding the front side of the imaging sensor 3 and a gesture of exposing the front side of the imaging sensor 3 may be recognized. In this case, the gesture of exposing the front side of the imaging sensor 3 is recognized by determining whether the ratio of newly detected feature points is greater than or equal to a predetermined threshold value (a ratio of 0.8 or the like) and determining whether the ratio of the pixels with a given luminance value i is less than a predetermined threshold value (a ratio of 0.2 or the like).

In the above description, the case in which the gesture recognition device 1 is applied to a music reproduction application has been described. However, the gesture recognition device 1 may be applied to an application in which a toggle operation such as reproduction and stop of a moving image or a slide show or On/Off switching of menu display is enabled or an application in which a mode operation such as change in a reproduction mode is enabled.

Reference Signs List

| | |
|---|---|
| 1, 2 | Gesture recognition device |
| 11 | Frame image generation unit |
| 13 | Grayscale image generation unit |
| 15 | Feature point detection unit |
| 17 | Feature point processing unit |
| 19 | Sensor movement determination unit |
| 21 | Histogram calculation unit |
| 23 | Histogram processing unit |
| 25 | Gesture determination unit |
| 27 | Motion region detection unit |
| 29 | Motion region processing unit |
| 31 | Recognition result notification unit |
| 33 | Feature point storage unit |
| 35 | Histogram storage unit |
| 37 | Motion region storage unit |
| 41 | Edge region extraction unit |
| 43 | Edge region processing unit |
| 45 | Edge region storage unit |
| Pa, Pb | Captured image |
| M1, M2, M3, M4 | Grayscale image |
| H1, H2 | Luminance value histogram |
| E1, E2 | Edge image |
| C | Feature point mark |
| A | Edge region |

## Claims

1. A gesture recognition device comprising:

   a first detection unit that detects a change in a captured image between a state in which a front side of an imaging sensor is not shielded and a state in which the front side of the imaging sensor is shielded; and
   a second detection unit that detects a region in which a gradient of a luminance value of the captured image is less than a threshold value in the captured image in the state in which the front side of the imaging sensor is shielded.

2. The gesture recognition device according to claim 1,
   wherein the first detection unit detects the change in the captured image based on a tracking result of feature points in the captured image.

3. The gesture recognition device according to claim 2,
wherein the first detection unit detects that the feature points tracked in the captured images in the state in which the front side of the imaging sensor is not shielded are lost in the captured images in a state in which the front side of the imaging sensor is screened with a hand.

4. The gesture recognition device according to claim 3,
wherein the first detection unit determines whether a ratio of the feature points lost during tracking to the feature points tracked in a plurality of the captured images in a predetermined period is equal to or greater than a threshold value.

5. The gesture recognition device according to claim 4, further comprising:

   a movement determination unit that determines movement of the imaging sensor based on a movement tendency of the plurality of feature points,
   wherein the predetermined period is set as a period in which the imaging sensor is not moved.

6. The gesture recognition device according to claim 1,
wherein the second detection unit detects the region in which the gradient of the luminance value of the captured image is less than the threshold value based on a calculation result of a luminance value histogram relevant to the captured image.

7. The gesture recognition device according to claim 6,
wherein the second detection unit determines whether a value obtained by normalizing a sum of frequencies near a maximum frequency as a total sum of frequencies is equal to or greater than a threshold value during the predetermined period using the luminance value histogram relevant to the plurality of captured images in the predetermined period.

8. The gesture recognition device according to claim 1,
wherein the second detection unit detects the region in which the gradient of the luminance value of the captured image is less than the threshold value based on an edge image relevant to the captured image.

9. The gesture recognition device according to claim 8,
wherein the second detection unit determines whether a ratio of edge regions in the edge image is less than the threshold value during the predetermined period using the edge images relevant to the plurality of captured images in the predetermined period.

10. The gesture recognition device according to claim 1,
wherein the first and second detection units perform a process for a partial region of the captured image, instead of the captured image.

11. The gesture recognition device according to claim 1,
wherein the first and second detection units perform a process for a grayscale image generated with a resolution less than that of the captured image from the captured image.

12. The gesture recognition device according to claim 1,
wherein a gesture provided by combining a gesture of shielding the front side of the imaging sensor and a gesture of exposing the front side of the imaging sensor is recognized.

13. The gesture recognition device according to claim 1, further comprising:

   the photographing sensor that captures a front side image.

14. A gesture recognition method comprising:

   detecting a change in a captured image between a state in which a front side of an imaging sensor is shielded and a state in which the front side of the imaging sensor is not shielded; and

detecting a region in which a gradient of a luminance value of the captured image is less than a threshold value in the captured image in the state in which the front side of the imaging sensor is shielded.

**15.** A program for causing a computer to execute:

detecting a change in a captured image between a state in which a front side of an imaging sensor is shielded and a state in which the front side of the imaging sensor is not shielded; and
detecting a region in which a gradient of a luminance value of the captured image is less than a threshold value in the captured image in the state in which the front side of the imaging sensor is shielded.

# FIG.1

U
3
1
Pa
DETECTION OF CHANGE IN CAPTURED IMAGE
DETECTION OF GRADIENT OF LUMINANCE VALUE

U
3
1
Pb
RECOGNITION OF SHIELDING GESTURE

FIG.2
1
CAPTURED IMAGE
FRAME IMAGE GENERATION
11
GRAYSCALE IMAGE GENERATION
13
MOTION REGION DETECTION
27
MOTION REGION
37
MOTION REGION PROCESSING
29
HISTOGRAM CALCULATION
21
HISTOGRAM
35
HISTOGRAM PROCESSING
23
FEATURE POINT DETECTION
15
FEATURE POINT
33
FEATURE POINT PROCESSING
17
GESTURE DETERMINATION
25
SENSOR MOVEMENT DETERMINATION
19
RECOGNITION RESULT NOTIFICATION
31
RECOGNITION RESULT

# FIG.3

START
GESTURE RECOGNITION PROCESS
S1
S3
IS SHIELDING GESTURE RECOGNIZED?
NO
YES
S5
IS FLICKING GESTURE RECOGNIZED?
NO
YES
GIVE NOTICE OF RECOGNITION RESULTS
S7
PERFORM PROCESS CORRESPONDING TO RECOGNIZED GESTURE
S8
S9
HAVE RECOGNITION PROCESSES ENDED?
NO
YES
END

# FIG.4

PROCESS OF RECOGNIZING SHIELDING GESTURE
GENERATE FRAME IMAGE
S11
GENERATE GRAYSCALE IMAGE
S13
DETECT AND TEMPORARILY STORE FEATURE POINTS
S15
CALCULATE AND TEMPORARILY STORE HISTOGRAM OF LUMINANCE VALUES
S17
TRACK FEATURE POINTS
S19
CLUSTER MOVEMENT VECTORS OF FEATURE POINTS
S21
IS IMAGING SENSOR MOVED?
S23
NO
YES
IS RATIO OF LOST FEATURE POINTS TO FEATURE POINTS GREATER THAN OR EQUAL TO THRESHOLD VALUE DURING PREDETERMINED PERIOD?
S27
NO
YES
IS RATIO OF PIXELS WITH GIVEN LUMINANCE VALUE GREATER THAN OR EQUAL TO THRESHOLD VALUE DURING PREDETERMINED PERIOD?
S29
NO
YES
DETERMINE THAT IMAGING SENSOR IS NOT SHIELDED
S25
DETERMINE THAT IMAGING SENSOR IS SHIELDED
S31

# FIG.5

M1
C

H1
r = 0.1
i
hi
M1

FIG.6

# FIG.7

M3
C

# FIG.8

M2

FIG.9

H2
r = 0.8
i
hi
i max
w

M2

FIG.10
2
CAPTURED IMAGE
11 FRAME IMAGE GENERATION
13 GRAYSCALE IMAGE GENERATION
27 MOTION REGION DETECTION
37 MOTION REGION
29 MOTION REGION PROCESSING
41 EDGE REGION EXTRACTION
45 EDGE REGION
43 EDGE REGION PROCESSING
15 FEATURE POINT DETECTION
33 FEATURE POINT
17 FEATURE POINT PROCESSING
19 SENSOR MOVEMENT DETERMINATION
25 GESTURE DETERMINATION
31 RECOGNITION RESULT NOTIFICATION
RECOGNITION RESULT

# FIG.11

PROCESS OF RECOGNIZING SHIELDING GESTURE
GENERATE FRAME IMAGE
S11
GENERATE GRAYSCALE IMAGE
S13
DETECT AND TEMPORARILY STORE FEATURE POINTS
S15
EXTRACT AND TEMPORARILY STORE EDGE REGIONS
S41
TRACK FEATURE POINTS
S19
CLUSTER MOVEMENT VECTORS OF FEATURE POINTS
S21
S23
IS IMAGING SENSOR MOVED?
NO
YES
S27
IS RATIO OF LOST FEATURE POINTS TO FEATURE POINTS GREATER THAN OR EQUAL TO THRESHOLD VALUE DURING PREDETERMINED PERIOD?
NO
YES
S43
IS RATIO OF EDGE REGIONS INCLUDED IN EDGE IMAGES GREATER THAN OR EQUAL TO THRESHOLD VALUE DURING PREDETERMINED PERIOD?
NO
YES
DETERMINE THAT IMAGING SENSOR IS NOT SHIELDED
S25
DETERMINE THAT IMAGING SENSOR IS SHIELDED
S31

E1
A

FIG.12

M1

FIG.13

E2
A

M2

# FIG.14

M4
F
C

## INTERNATIONAL SEARCH REPORT

International application No.
PCT/JP2011/057944

A. CLASSIFICATION OF SUBJECT MATTER
*G06T7/20*(2006.01)i, *G06F3/01*(2006.01)i

According to International Patent Classification (IPC) or to both national classification and IPC

B. FIELDS SEARCHED

Minimum documentation searched (classification system followed by classification symbols)
G06T7/20, G06F3/01

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-302199 A (Hitachi, Ltd.), 02 November 2006 (02.11.2006), paragraphs [0035] to [0036] (Family: none) | 1-15 |
| A | JP 2009-530726 A (Volkswagen AG.), 27 August 2009 (27.08.2009), paragraphs [0068] to [0070]; fig. 20 to 27 & US 2009/0327977 A1 & EP 1998996 A & WO 2007/107368 A1 & DE 102006037156 A & KR 10-2008-0108970 A & CN 101405177 A & RU 2008137618 A | 1-15 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 April, 2011 (14.04.11) | 26 April, 2011 (26.04.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H7146749 A


### Non-patent literature cited in the description


- **IKE et al.** Hand Gesture User Interface Using Cell Broadband Engine™. *Toshiba Review,* 2007, vol. 62 (6), 52-55